# EUROPÄISCHE PATENTANMELDUNG

(11) **EP 4 296 033 A1**
(43) Veröffentlichungstag der Anmeldung: **27.12.2023**
(21) Anmeldenummer: 23173941.8
(22) Anmeldetag: 17.05.2023
(51) Int. Cl.: B29C 48/10, B29C 48/92, B29C 48/88, B29C 48/885, B29C 48/255, B29C 48/32

(54) **VORRICHTUNG ZUR KÜHLUNG VON BLASFOLIE, SYSTEM UND VERFAHREN ZU DEREN HERSTELLUNG**

(30) Priorität: 20.06.2022 DE 102022115298
(71) Anmelder: Octagon Blown Film Control GmbH, 97076 Würzburg (DE)
(72) Erfinder: Geiger, Jürgen, 97299 Zell am Main (DE); Schäfer, Roland, 97355 Kleinlangheim (DE)
(74) Vertreter: Hannke Bittner & Partner mbB Regensburg

(57) **Zusammenfassung**

Die Erfindung betrifft eine Vorrichtung zur Kühlung von schlauchförmig extrudierter Blasfolie mittels eines auf die Oberfläche der Blasfolie gerichteten Kühlluftstroms, umfassend einen Kühlringkörper mit mindestens drei innenumfänglich verlaufenden und axial übereinander angeordneten ringförmigen Luftaustritten, die den Kühlluftstrom bereitstellen, wobei die Luftaustritte jeweils über einen sich im Wesentlichen radial erstreckenden Luftringkanal mit einem Kühlluft bereitstellenden Luftringraum fluidisch verbunden sind, wobei mindestens ein äußerer Luftringraum und ein innerer Luftringraum vorgesehen sind, die räumlich separiert voneinander angeordnet sind, wobei mindestens einer der Luftaustritte als separater Luftaustritt ausgebildet ist, dem ausschließlich durch den äußeren oder den inneren Luftringraum Kühlluft bereitgestellt ist.

## Beschreibung

Die Erfindung betrifft eine Vorrichtung zur Kühlung von schlauchförmig extrudierter Blasfolie, ein System zur Herstellung von schlauchförmig extrudierter Blasfolie umfassend die Vorrichtung sowie ein Verfahren zur Herstellung eines Folienschlauchs unter Verwendung des Systems.

Folien, insbesondere aus Kunststoff, wie Polypropylen oder Polyethylen, haben ein sehr breites Anwendungsspektrum und werden unter anderem als Verpackungsmaterial vielseitig eingesetzt. Die Anforderungen an die Folie und damit deren erforderliche Eigenschaften hängen stark von dem Einsatzgebiet ab. Bereits durch die verwendete Herstellungsart lassen sich die Eigenschaften entsprechend einstellen.

Blasfolie ist eine Folienart, die typischerweise für Lebensmittelfolien, Tragetaschen, Müllbeutel und Hygienefolien verwendet wird. Blasfolie wird, im Gegensatz zu gegossener Castfolie, bei der Herstellung durch einen Extruder nach oben geblasen, wobei die aus dem Extruder über eine Ringdüse austretende schlauchförmige Schmelze vom Austritt aus der Ringdüse bis zum Erstarren gekühlt wird. Das Kühlen der extrudierten Blasfolie ist ein entscheidender Faktor, um zum einen die Eigenschaften, wie dem Dickenprofil, der Folie einzustellen und zum anderen die Produktionskapazität zu erhöhen sowie gleichzeitig die Produktionskosten zu senken.

Zur Kühlung des Folienschlauchs kommt ein spezieller Kühlring zum Einsatz, über den sich ein Kühlluftstrom am Außenumfang der Folie gezielt einstellen und regeln lässt, wodurch eine bessere Foliengeometire, Blasenstabilität und Korrektur des Dickenprofils ermöglicht wird.

Für eine optimale Kühlung und Verfahrensführung ist es entscheidend, dass der Kühlring die Einstellung verschiedener Parameter, den Kühlluftstrom betreffend, gewährleistet und diese Einstellungen schnell und einfach an die vorliegenden Bedingungen und Anforderungen anzupassen. Aus dem Stand der Technik bekannte Kühlringe bieten zwar Anpassungsmöglichkeiten, jedoch sind diese oft nicht ausreichend.

Aufgabe der vorliegenden Erfindung ist es daher, eine Vorrichtung, ein System sowie ein Verfahren bereitzustellen, welche die angeführten Nachteile des Standes der Technik überwinden.

Diese Aufgabe wird gelöst von einer Vorrichtung zur Kühlung von schlauchförmig extrudierter Blasfolie, insbesondere von Kunststofffolie, mittels eines auf die Oberfläche der Blasfolie gerichteten Kühlluftstroms, umfassend einen Kühlringkörper mit mindestens drei innenumfänglich verlaufenden und axial übereinander angeordneten ringförmigen Luftaustritten, die den Kühlluftstrom bereitstellen, wobei die Luftaustritte jeweils über einen sich im Wesentlichen radial erstreckenden Luftringkanal mit einem Kühlluft bereitstellenden Luftringraum fluidisch verbunden sind, wobei mindestens ein äußerer Luftringraum und ein innerer Luftringraum vorgesehen sind, die räumlich separiert voneinander angeordnet sind, wobei mindestens einer der Luftaustritte als separater Luftaustritt ausgebildet ist, dem ausschließlich durch den äußeren oder den inneren Luftringraum Kühlluft bereitgestellt ist.

Erfindungsgemäß ist der Kühlringkörper im Wesentlichen kreisringförmig ausgebildet. Die Angaben axial und radial, die räumliche Orientierung betreffend, beziehen sich auf eine gedachte Achse durch den Mittelpunkt des Kühlringkörpers. Eine axiale Richtung bzw. Axialrichtung des Kühlringkörpers zeigt in eine Abzugsrichtung der Blasfolie, wobei eine radiale Richtung bzw. Radialrichtung senkrecht zur Axialrichtung verläuft. Eine Umfangsrichtung verläuft mit dem Innen- oder Außenumfang des Kühlringkörpers bzw. der Vorrichtung.

Ein erfindungsgemäßer Luftringraum erstreckt sich ringförmig und zumindest teilweise innerhalb des Kühlringkörpers oder an dem Kühlringkörper, insbesondere außenumfänglich an dem Kühlringkörper. Ein Luftringraum stellt die Kühlluft zur Verfügung, die als Kühlluftstrom aus den Luftaustritten die Blasfolie kühlt, wobei als Kühlluft bevorzugt Umgebungsluft verwendet wird. Es ist jedoch auch denkbar, dass ein beliebiges geeignetes Gas oder Gasgemisch als Kühlluft verwendet werden kann. Erfindungsgemäß wird unter einem Luftringraum ein ringförmig in oder an dem Kühlringkörper verlaufender (Hohl-)Raum verstanden, der mindestens einen der Luftaustritte über einen Luftringkanal mit Kühlluft versorgt.

Der äußere und innere Luftringraum sind erfindungsgemäß räumlich separiert bzw. getrennt voneinander angeordnet. Unter einer räumlichen Trennung bzw. Separierung wird verstanden, dass die Luftringräume zwar fluidisch miteinander verbunden sein können, sich die Luftringräume jedoch an unterschiedlichen radialen und/oder axialen Positionen innerhalb des Kühlringkörpers erstrecken. Bevorzugt erstreckt sich der äußere Luftringraum radial weiter außen als der innere Luftringraum. Der mindestens eine separate Luftaustritt wird ausschließlich durch einen der Luftringräume mit Kühlluft versorgt. Im Sinne der Erfindung bedeutet dies, dass dem separaten Luftringraum Kühlluft bereitgestellt wird, die nur durch den äußeren oder inneren Luftringraum geströmt ist und nicht zuvor durch den jeweils anderen Luftringraum.

Bevorzugt setzt ich der Kühlluftstrom der Vorrichtung aus den einzelnen Kühlluftströmen der Luftaustritte des Kühlringkörpers zusammen.

Durch die erfindungsgemäße Anordnung von mindestens zwei räumlich getrennten Ringlufträumen ist es möglich, die Kühlluft bzw. den Kühlluftstrom des separaten Luftaustritts unabhängig von den weiteren Luftaustritten einzustellen bzw. zu regeln, da dieser ausschließlich durch einen der Luftringräume mit Kühlluft gespeist wird. Auf diese Weise kann die Kühlung individueller und gezielter auf die jeweiligen Bedürfnisse und Gegebenheiten angepasst werden, als wenn alle Luftaustritte durch einen gemeinsamen Luftringraum gespeist wären.

Gemäß einer bevorzugten Ausführungsform mündet zumindest in den äußeren und den inneren Luftringraum jeweils mindestens ein Luftringkanal. Durch die Mündung mindestens eines Luftringkanals, der wiederrum einen Luftaustritt mit Kühlluft versorgt, in jeden der mindestens zwei räumlich getrennten Luftringräume erfolgt auch die Bereitstellung der entsprechenden Luftaustritte mit Kühlluft getrennt voneinander. Somit ist die Bereitstellung der Kühlluft an den Mündungen der Luftringkanäle bevorzugt bereits dort einstellbar bzw. regelbar. Die Kühlluft bzw. der Kühlluftstrom lässt sich auf diese Weise vereinfacht unabhängig voneinander steuern. Gemäß dieser Ausführungsform kann ein Luftringraum dahingehend definiert werden, dass es sich um einen ringförmig in oder an dem Kühlringkörper verlaufenden (Hohl-)Raum handelt, in dem mindestens ein Luftringkanal mündet. Bevorzugt mündet in dem äußeren Luftringraum genau ein Luftringkanal, bevorzugt der separate Luftringkanal, und in den inneren Luftringkanal münden genau zwei Luftringkanäle.

Gemäß einer bevorzugten Ausführungsform ist der den mindestens einen separaten Luftaustritt mit dem entsprechenden Luftringraum verbindende Luftringkanal als separater Luftringkanal ausgebildet, der mittels mindestens eines separaten Verbindungselements, insbesondere mittels eines Rohrelements, fluidisch mit dem entsprechenden Luftringraum verbunden ist. Bevorzugt ist ausschließlich der separate Luftringkanal über das Verbindungselement direkt mit dem entsprechenden Luftringraum verbunden. Somit wird die Kühlluft aus dem Ringluftraum durch die Verbindungselemente in den verbundenen Luftringkanal überführt und von dort weiter an den entsprechenden Luftaustritt. Gemäß dieser Ausführungsform kann ein Luftringraum dahingehend definiert werden, dass es sich um einen ringförmig in oder an dem Kühlringkörper verlaufenden (Hohl-)Raum handelt, in dem mindestens ein Luftringkanal direkt oder indirekt über ein Verbindungselement mündet. Bevorzugt erstrecken sich die Verbindungselemente bezogen auf den Kühlringkörper im Wesentlichen radial und sind weiter bevorzugt an einer Unterseite des Kühlringkörpers, insbesondere kreisförmig benachbart, angeordnet. Durch die separaten Verbindungselemente, die die Kühlluft von dem Ringluftraum in den Luftringkanal leiten, kann die entsprechend durchgeleitete Kühlluft jeweils separat geführt und angepasst werden.

Bevorzugt handelt es sich bei dem separaten Luftaustritt um den axial bzw. auf die Axialrichtung des Kühlringkörpers bezogen untersten Luftaustritt. Bevorzugt verlaufen auch die Luftringkanäle, analog den damit verbundenen Luftaustritten, axial übereinander, sodass der separate Luftringkanal bevorzugt der axial bzw. auf die Axialrichtung des Kühlringkörpers bezogen unterste Luftringkanal ist.

Gemäß einer bevorzugten Ausführungsform ist zumindest innerhalb des mindestens einen separaten Verbindungselements eine Temperiereinheit angeordnet, die dazu ausgebildet ist die in Richtung des separaten Luftaustritts hindurchströmende Kühlluft aufzuheizen und/oder abzukühlen. Durch die Temperiereinheit in den Verbindungselementen kann die Temperatur des Kühlluftstroms jeweils separat angepasst werden.

Gemäß einer bevorzugten Ausführungsform ist mindestens eine Verdampfereinheit vorgesehen, welche dazu ausgebildet und dafür vorgesehen ist, ein flüssiges Fluid zu verdampfen und ein diesbezügliches Aerosol oder einen Dampf zu erzeugen. Bevorzugt ist die mindestens eine Verdampfereinheit zumindest teilweise innerhalb des mindestens einen separaten Verbindungselements angeordnet oder ist zumindest fluidisch mit dem mindestens einen separaten Verbindungselement derart verbunden, dass zumindest das erzeugte Aerosol oder der Dampf in das mindestens eine separate Verbindungselement einbringbar ist. Bevorzugt kann in jedem separaten Verbindungselement eine Verdampfereinheit angeordnet sein oder es kann eine Verdampfereinheit fluidisch mit mehreren separaten Verbindungselementen verbunden sein. Bevorzugt handelt es sich bei dem zu verdampfenden Fluid um Wasser und bei dem Aerosol bzw. Dampf um Nassdampf oder Wasserdampf. Bevorzugt ist die Verdampfereinheit mit einer Fluidversorgungseinheit fluidisch verbunden, welche das Fluid nach Bedarf zur Verfügung stellt. Auf diese Weise wird die in Richtung des separaten Luftaustritts hindurchströmende Kühlluft mit dem Aerosol bzw. Dampf angereichert, im Fall von Wasser also die Luftfeuchtigkeit erhöht, wodurch die Kühlleistung vorteilhaft verbessert werden kann.

Gemäß einer bevorzugten Ausführungsform ist innerhalb des mindestens einen separaten Verbindungselements ein erstes Stellglied, insbesondere ein Ventil, angeordnet, mittels welchem ein Kühlluftstrom, insbesondere die Luftmenge und die Luftgeschwindigkeit, des separaten Luftaustritts regelbar, insbesondere maschinell regelbar, ist. Durch das Stellglied in den Verbindungselementen kann der Kühlluftstrom, die durch das Verbindungselement in den Luftringkanal und von dort zu den Luftaustritten gelangt, jeweils separat angepasst werden.

Bevorzugt ist es möglich, durch die Temperiereinheit und das Stellglied, die jeweils innerhalb des separaten Verbindungselements, welches den entsprechenden Luftringraum mit dem separaten Luftringkanal und damit mit dem separaten Luftaustritt verbindet, angeordnet sind, die Kühlluft, die durch das separate Verbindungselement und den separaten Luftringkanal strömt hinsichtlich Temperatur und Luftmenge/Luftgeschwindigkeit anzupassen, sodass auch der Kühlluftstrom des separaten Luftaustritts entsprechend anpassbar ist. Die Temperiereinheit und/oder das Stellglied innerhalb des separaten Verbindungselements werden bevorzugt basierend auf Messdaten mindestens eines Sensors geregelt, wobei der mindestens eine Sensor bevorzugt eine Temperatur der Umgebung und/oder der extrudierten Blasfolie, eine Luftfeuchtigkeit, einen Umgebungsdruck oder einen Abstand erfasst. Durch die Anordnung der Temperiereinheit und des Stellglieds innerhalb des separaten Verbindungselements lässt sich die Regelung bzw. die Einstellung des Kühlluftstroms des separaten Luftaustritts besonders einfach implementieren und warten.

Gemäß einer bevorzugten Ausführungsform ist eine Luftzuführung jeweils fluidisch mit dem äußeren und dem inneren Luftringraum verbunden, sodass die für die Luftaustritte bereitgestellte Kühlluft durch die Luftzuführung direkt und unabhängig voneinander in den jeweiligen Luftringraum einbringbar ist. Durch die Luftzuführung wird Kühlluft gezielt in den damit verbundenen Luftringraum eingebracht. Durch diese Anordnung können sowohl der äußere als der innere Luftringraum bei Bedarf getrennt voneinander mit Kühlluft versorgt werden. Unter einer direkten Verbindung zwischen einem Luftringraum und der Luftzuführung wird verstanden, dass die Kühlluft von der Luftzuführung direkt in den verbundenen Luftringraum übergeht und nicht zunächst in einen anderen Luftringraum und von dort in den verbundenen Luftringraum gelangt.

Gemäß einer bevorzugten Ausführungsform ist eine Luftzuführung fluidisch mit dem äußeren Luftringraum verbunden. Bevorzugt ist der äußere Luftringraum wiederrum fluidisch mit dem inneren Luftringraum und, über den separaten Luftringkanal und das separate Verbindungselement, mit dem mindestens einen separaten Luftaustritt verbunden. Auf diese Weise ist die für den separaten Luftaustritt bereitgestellte Kühlluft durch die Luftzuführung direkt in den äußeren Luftringraum und die für die weiteren Luftaustritte bereitgestellte Kühlluft durch die Luftzuführung indirekt über den äußeren Luftringraum in den inneren Luftringraum einbringbar. Diese Ausführung ermöglicht es insbesondere den Kühlluftstrom über den separaten Luftringkanal und das separate Verbindungselement in den mindestens einen separaten Luftaustritt unabhängig anzupassen und gemäß der Bedürfnisse zu steuern bzw. zu regeln.

Bevorzugt strömt die Kühlluft ausgehend von der Luftzuführung über mindestens einen verbundenen Luftringraum durch einen Luftringkanal, wenn vorhanden über ein Verbindungselement, zu einem Luftaustritt.

Gemäß einer bevorzugten Ausführungsform ist mindestens ein Luftringkanal durch eine Mehrzahl von sich im Wesentlichen radial erstreckenden Trennelementen in eine Mehrzahl von Luftringkanalsegmente unterteilt, die umfänglich benachbart angeordnet sind, sodass auch der Kühlluftstrom des jeweils verbundenen Luftaustritts segmentiert ist. Somit kann für jedes Luftringkanalsegment der Kühlluftstrom separat eingestellt werden. Bevorzugt sind mindestens oder genau zwei Luftringkanäle durch Trennelemente in Luftringkanalsegmente unterteilt, besonders bevorzugt sind der separate Luftringkanal und/oder der axial bzw. auf die Axialrichtung des Kühlringkörpers bezogen oberste Luftringkanal unterteilt.

Gemäß einer bevorzugten Ausführungsform ist der Kühlluftstrom, insbesondere die Luftmenge und die Luftgeschwindigkeit, mindestens eines Luftaustritts, insbesondere der Luftringkanalsegmente, mittels mindestens eines zweiten Stellglieds, insbesondere mit einer Lineareinheit, regelbar, insbesondere maschinell regelbar. Bevorzugt ist der Kühlluftstrom, insbesondere die Luftmenge und die Luftgeschwindigkeit, der weiteren Luftaustritte mittels mindestens eines Einstellelements, insbesondere eines Lochblechs, einstellbar, insbesondere manuell einstellbar. Bevorzugt ist der Kühlluftstrom durch jedes der Luftringkanalsegmente individuell durch ein Stellglied regelbar bzw. einstellbar, besonders bevorzugt ist der Kühlluftstrom durch mehrere der Luftringkanalsegmente, d.h. abschnittsweise, durch ein Stellglied regelbar bzw. einstellbar. Bevorzugt sind also genau so viele Stellglieder wie Luftringkanalsegmente angeordnet, besonders bevorzugt sind demnach weniger Stellglieder als Luftringkanalsegmente vorgesehen. Bevorzugt ist der Kühlluftstrom durch mindestens oder genau zwei Luftringkanäle durch Stellglieder oder Einstellelemente regelbar bzw. einstellbar, besonders bevorzugt ist der Kühlluftstrom durch den separaten Luftringkanal und/oder den axial bzw. auf die Axialrichtung des Kühlringkörpers bezogenen obersten Luftringkanal regelbar bzw. einstellbar. Weiter bevorzugt entspricht die Anzahl der zweiten Stellglieder der Anzahl der Luftringkanalsegmente beim den axial bzw. auf die Axialrichtung des Kühlringkörpers bezogenen obersten Luftringkanal. Im Sinne der Erfindung wird unter regelbar oder geregelt eine Regelung basierend auf Messdaten, beispielsweise Sensordaten, verstanden, wobei die Regelung kontinuierlich und automatisch erfolgt. Bei den Messdaten kann es sich beispielsweise um eine Dicke bzw. ein Dickenprofil der Blasfolie handeln. Unter einstellbar und eingestellt wird im Sinne der Erfindung verstanden, dass die Einstellung "von Hand" getätigt wird, und automatisch oder kontinuierlich erfolgt.

Gemäß einer bevorzugten Ausführungsform sind die Trennelemente bezogen auf eine Umfangsrichtung des Kühlringkörpers gekippt angeordnet, sodass ein ringstromförmiger Kühlluftstrom erzeugt wird. Durch die gekippte bzw. schräge Anordnung der Trennelemente wird ein ringstromförmiger Kühlluftstrom um die äußere Oberfläche der Folie erzeugt, wobei eine längere Kontaktzeit zwischen der Folie und der Kühlluft gewährleistet wird. Der ringstromförmiger Kühlluftstrom strömt innenumfänglich zum Kühlringkörper, bevorzugt zumindest in einem Bereich zwischen dem Innenumfang des Kühlringkörpers und der Oberfläche der Blasfolie. Bevorzugt sind die Trennelemente mindestens eines Luftringkanals gekippt bzw. schräg angeordnet. In diesem Sinne können die Trennelemente auch als Leitelemente bezeichnet werden, die den Kühlluftstrom ringstromförmig leiten.

Gemäß einer bevorzugten Ausführungsform stellen mindestens zwei Luftaustritte jeweils einen Kühlluftstrom in einer Axialrichtung des Kühlringkörpers und mindestens ein Luftaustritt, insbesondere der separate Luftaustritt, einen Kühlluftstrom entgegen der Axialrichtung des Kühlringkörpers bereit. Die Axialrichtung des Kühlringkörpers entspricht einer Abzugsrichtung der Blasfolie, d.h. dass mindestens zwei Luftaustritte jeweils einen Kühlluftstrom in Abzugsrichtung der Blasfolie und mindestens ein Luftaustritt, insbesondere der separate Luftaustritt, einen Kühlluftstrom entgegen der Abzugsrichtung der Blasfolie bereitstellen. Durch diese Ausführung der Kühlluftströme kann die Blasfolie in einem größeren Bereich gekühlt werden und die Kühlleistung lässt sich damit verbessern. Die Richtung des Kühlluftstroms aus den Luftaustritten lässt sich insbesondere durch eine entsprechende Ausgestaltung von Lippen der Luftaustritte beeinflussen.

Die Aufgabe wird ebenfalls gelöst von einem System zur Herstellung von schlauchförmiger Blasfolie, umfassend eine erfindungsgemäße Vorrichtung zur Kühlung der schlauchförmig extrudierten Blasfolie und einen Blasfolienextruder mit einem Folienblaskopf, der eine Ringdüse umfasst, aus der die Blasfolie schlauchartig austritt, wobei der Blasfolienextruder bezogen auf eine Axialrichtung eines Kühlringkörpers unterhalb der Vorrichtung angeordnet ist, sodass die durch den Blasfolienextruder extrudierte Blasfolie durch die Vorrichtung gekühlt wird. Bevorzugt sind der Blasfolienextruder bzw. der Folienblaskopf bzw. die Ringdüse und die Vorrichtung bzw. der Kühlringkörper koaxial übereinander angeordnet.

Die durch die Ringdüse extrudierte Blasfolie liegt nach der Extrusion noch als Schmelze vor. Die Blasfolie bzw. Schmelze tritt in einer Abzugsrichtung aus, die einer Axialrichtung des Kühlringkörpers der Vorrichtung entspricht bzw. parallel dazu verläuft. Die Abzugsrichtung kann dabei vertikal von oben nach unten oder von unten nach oben oder horizontal verlaufen. Die Blasfolie verläuft durch den Kühlringkörper bzw. durch die Kreisringmitte hindurch in Axialrichtung, sodass die mindestens drei innenumfänglich verlaufenden und axial übereinander angeordneten ringförmigen Luftaustritte den Kühlluftstrom auf die Oberfläche der Blasfolie richten.

Bevorzugt ist der Folienschlauch nach passieren der Vorrichtung bzw. des Kühlringkörpers durch einen Kalibrierkorb geführt. Der Kalibrierkorb ist dabei dazu ausgebildet und dafür vorgesehen, die Position des Folienschlauchs zu stabilisieren. Bevorzugt ist bezogen auf die Abzugsrichtung nach dem Kalibrierkorb ein Messsensor, bevorzugt zum Messen eines Dickenprofils der Folie, angeordnet. Weiter bevorzugt ist bezogen auf die Abzugsrichtung nach dem Messsensor ein Wendestangensystem angeordnet, welches dazu ausgebildet und dafür vorgesehen ist, den Folienschlauch mindestens einmal zu wenden und planar zusammenzulegen, sodass eine zweilagige planare Folie erhalten wird. Solche Komponenten sind aus dem Stand der Technik bekannt und sollen hier nicht weiter beschrieben werden.

Gemäß einer bevorzugten Ausführungsform ist ein Abstand zwischen der Vorrichtung und dem Blasfolienextruder einstellbar. Bevorzugt ist der Kühlluftstrom, insbesondere die Luftmenge und die Luftgeschwindigkeit, mindestens eines Luftaustritts, insbesondere des separaten Luftaustritts, in Abhängigkeit des Abstandes regelbar und/oder einstellbar. Bevorzugt wird der Kühlluftstrom bei einem minimalen Abstand zwischen Vorrichtung und Blasfolienextruder auf Null eingestellt, d.h. abgestellt, wobei je größer der Abstand zwischen Vorrichtung und Blasfolienextruder ist, der Kühlluftstrom desto stärker eingestellt bzw. geregelt ist.

Ferner wird die Aufgabe gelöst von einem Verfahren zur Herstellung von schlauchförmiger Blasfolie unter Verwendung eines erfindungsgemäßen Systems.

Bevorzugt umfasst das Verfahren die Schritte:
a) Extrudieren einer schlauchförmigen Blasfolienschmelze in einer Abzugsrichtung, bevorzugt unter Einstellung oder Regelung eines Abstands zwischen dem Blasfolienextruder und der Vorrichtung zur Kühlung der schlauchförmig extrudierten Blasfolie;
b) Kühlen der extrudierten Blasfolie unter Einstellung oder Regelung des Kühlluftstroms und/oder der Temperatur des Kühlluftstroms mindestens eines Luftaustritts, insbesondere des separaten Luftaustritts.

Die Regelung des Kühlluftstroms und/oder der Temperatur des Kühlluftstroms erfolgt bevorzugt basierend auf Messdaten mindestens eines Sensors, wobei der mindestens eine Sensor bevorzugt eine Temperatur der Umgebung und/oder der extrudierten Blasfolie, eine Luftfeuchtigkeit, einen Umgebungsdruck oder einen Abstand erfasst.

Die Merkmale, die für die Vorrichtung beschrieben sind, sollen mutatis mutandis für das System und das Verfahren gelten und umgekehrt.

Weitere Ziele, Vorteile und Zweckmäßigkeiten der vorliegenden Erfindung sind der nachfolgenden Beschreibung in Verbindung mit den Zeichnungen zu entnehmen. Hierbei zeigen:
- Fig. 1: ein System gemäß einer bevorzugten Ausführungsform der Erfindung;
- Fig. 2: eine Querschnittsansicht einer Vorrichtung gemäß einer bevorzugten Ausführungsform der Erfindung;
- Fig. 3: eine Detailansicht der Querschnittsansicht der Vorrichtung aus Fig. 2;
- Fig. 4: eine Detailansicht einer Querschnittsansicht einer Vorrichtung gemäß einer weiteren bevorzugten Ausführungsform der Erfindung;
- Fig. 5: eine Querschnittsansicht von unten einer Vorrichtung gemäß einer bevorzugten Ausführungsform der Erfindung;
- Fig. 6: ein separates Verbindungselement gemäß einer bevorzugten Ausführungsform der Erfindung.

Gleiche Elemente bzw. Komponenten sind in den Figuren mit gleichen Bezugszeichen gekennzeichnet. Aus Übersichtlichkeitsgründen können in manchen Figuren bestimmte Elemente bzw. Komponenten nicht mit Bezugszeichen gekennzeichnet sein, die in einer anderen Figur gekennzeichnet sind.

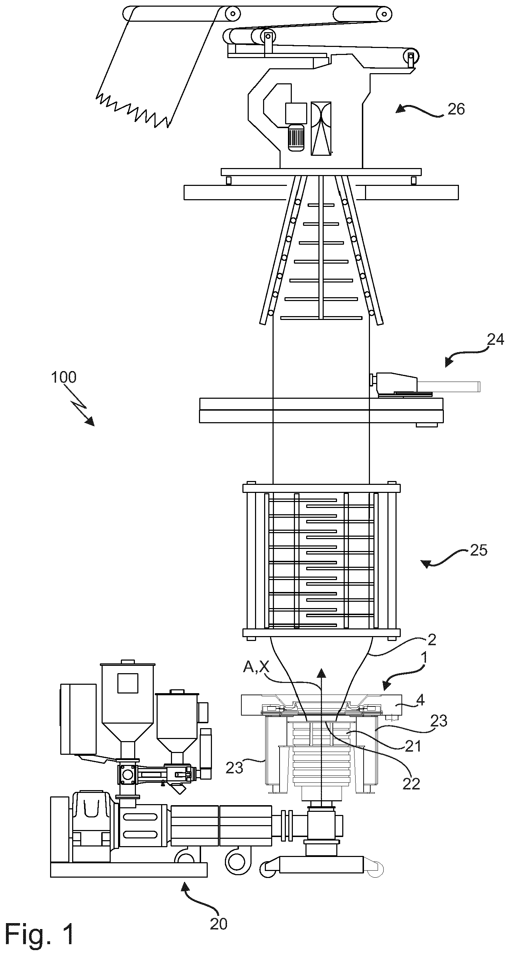

In Figur 1 ist ein System 100 gemäß einer bevorzugten Ausführungsform der Erfindung gezeigt, welches mit einer Vorrichtung 1 gemäß einer bevorzugten Ausführungsform der Erfindung ausgestattet ist.

Das System 100 zur Herstellung von schlauchförmiger Blasfolie 2 umfasst eine Vorrichtung 1 zur Kühlung der schlauchförmig extrudierten Blasfolie 2 und einen Blasfolienextruder 20 mit einem koaxial zur Vorrichtung 1 angeordneten Folienblaskopf 21, der eine Ringdüse 22 umfasst, aus der die Blasfolie 2 schlauchartig austritt, wobei der Blasfolienextruder 20 bezogen auf eine Axialrichtung A eines Kühlringkörpers 4 der Vorrichtung unterhalb der Vorrichtung 1 angeordnet ist, sodass die durch den Blasfolienextruder 20 extrudierte Blasfolie durch die Vorrichtung 1 gekühlt wird. Die Axialrichtung A entspricht einer Abzugsrichtung X der schlauchförmigen Blasfolie 2 und verläuft vertikal von unten nach oben. Die extrudierte Blasfolie 2 wird durch die Vorrichtung 1 bzw. den Kühlringkörper 4 hindurchgeführt, wobei die Blasfolie 2 mittels eines auf die Oberfläche der Blasfolie 2 gerichteten Kühlluftstroms gekühlt wird. Details zur Vorrichtung und der Kühlluftströme folgen in den weiteren Figuren.

Die Vorrichtung 1 kann über Hubelemente 23 derart angeordnet sein, dass eine Position in Axialrichtung A bzw. in Abzugsrichtung X relativ zum Folienblaskopf 21 einstellbar oder regelbar ist.

Bezogen auf die Abzugsrichtung X bzw. die Axialrichtung A ist hinter der Vorrichtung 1 bzw. hinter dem Kühlringkörper 4 ein Kalibrierkorb 25 angeordnet, durch welchen der Folienschlauch 2 hindurch geführt ist. Der Kalibrierkorb 25 ist im Wesentlichen hohlzylinderförmig ausgebildet und dazu ausgebildet und dafür vorgesehen, die Position des Folienschlauchs 2 zu stabilisieren. Bezogen auf die Abzugsrichtung X ist nach dem Kalibrierkorb 25 ein Messsensor 24 angeordnet, bevorzugt zum Messen eines Dickenprofils der Folie 2. Wiederum bezogen auf die Abzugsrichtung X ist nach dem Messsensor 24 ein Wendestangensystem 26 angeordnet, welches dazu ausgebildet und dafür vorgesehen ist, den Folienschlauch 2 mindestens einmal zu wenden und planar zusammenzulegen, sodass eine zweilagige planare Folie erhalten wird.

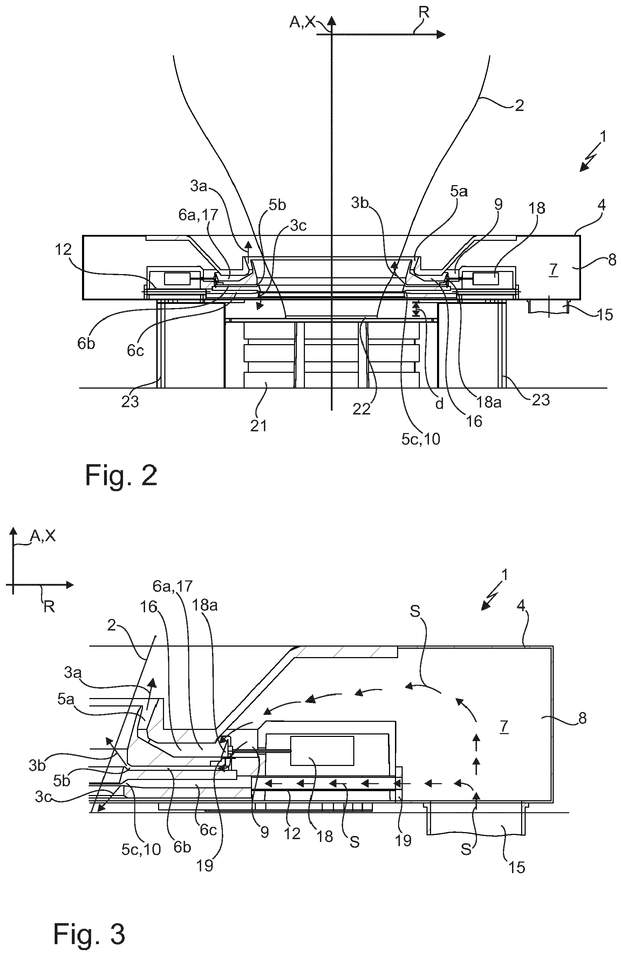

In den Figuren 2 und 3 ist die Vorrichtung 1 zur Kühlung von schlauchförmig extrudierter Blasfolie 2 gemäß einer bevorzugten Ausführungsform der Erfindung im Querschnitt gezeigt. Der Schnitt erfolgt senkrecht zur Axialrichtung A bzw. Abzugsrichtung X durch den Mittelpunkt der ringförmigen Vorrichtung 1. In Figur 2 ist dabei die vollständige Vorrichtung 1 dargestellt, wobei in Figur 3 eine Detailansicht des Querschnitts gezeigt ist.

Die Kühlung ist mittels eines auf die Oberfläche der Blasfolie 2 gerichteten Kühlluftstroms 3a, 3b, 3c gewährleistet. Die Vorrichtung 1 umfasst einen Kühlringkörper 4 mit drei innenumfänglich verlaufenden und axial übereinander angeordneten ringförmigen Luftaustritten 5a, 5b, 5c, die den Kühlluftstrom 3a, 3b, 3c bereitstellen. Die Luftaustritte 5a, 5b, 5c sind jeweils über einen sich im Wesentlichen radial erstreckenden Luftringkanal 6a, 6b, 6c mit einem Kühlluft 7 bereitstellenden Luftringraum 8, 9 fluidisch verbunden.

Gemäß der gezeigten Ausführungsform ist ein erster Luftaustritt 5a, ein zweiter Luftaustritt 5b und ein dritter Luftaustritt 5c ausgebildet, wobei der erste Luftaustritt 5a axial den obersten Luftaustritt darstellt und der dritte Luftaustritt 5c axial den untersten, wobei der zweite Luftaustritt 5b axial dazwischen angeordnet ist. Analog sind auch die radial verlaufenden Luftringkanäle 6a, 6b, 6c axial angeordnet, wobei der erste Luftringkanal 6a mit dem ersten Luftaustritt 5a, der zweite Luftringkanal 6b mit dem zweiten Luftaustritt 5b und der dritte Luftringkanal 6c mit dem dritten Luftaustritt 5c verbunden ist. Der erste Luftaustritt 5a stellt einen ersten Kühlluftstrom 3a, der zweite Luftaustritt 5b einen zweiten Kühlluftstrom 3b und der dritte Luftaustritt 5c einen dritten Kühlluftstrom 3c bereit.

Der erste Luftaustritt 5a und der zweite Luftaustritt 5b stellen jeweils einen Kühlluftstrom 3a, 3b in der Axialrichtung A des Kühlringkörpers 4 bzw. in der Abzugsrichtung X und der dritte, separate Luftaustritt 5c, 10 einen Kühlluftstrom 3c entgegen der Axialrichtung A des Kühlringkörpers 4 bzw. der Abzugsrichtung X bereit.

Es sind ein äußerer Luftringraum 8 und ein innerer Luftringraum 9 ausgebildet, die räumlich separiert voneinander angeordnet sind. Der äußere Luftringraum 8 ist radial weiter außen angeordnet als der innere Luftringraum 9. Der äußere Luftringraum 8 nimmt in der äußersten Radialposition des Kühlringkörpers 4 in Axialrichtung A und Radialrichtung R die volle Ausdehnung des Kühlringkörpers 4 ein. Der dritte Luftaustritt 5c ist gemäß der gezeigten Ausführungsform als separater Luftaustritt 10 ausgebildet, dem ausschließlich durch den äußeren Luftringraum 8 Kühlluft 7 bereitgestellt ist. In den äußeren Luftringraum 8 mündet nur der dritte Luftringkanal 6c, der mit dem separaten dritten Luftaustritt 5c verbunden ist. Der erste 6a und der zweite Luftringkanal 6b münden in den inneren Luftringraum 9. Aussagen, die sich auf den dritten Luftaustritt 5c beziehen, beziehen sich mutatis mutandis auf den separaten Luftaustritt 10 und umgekehrt.

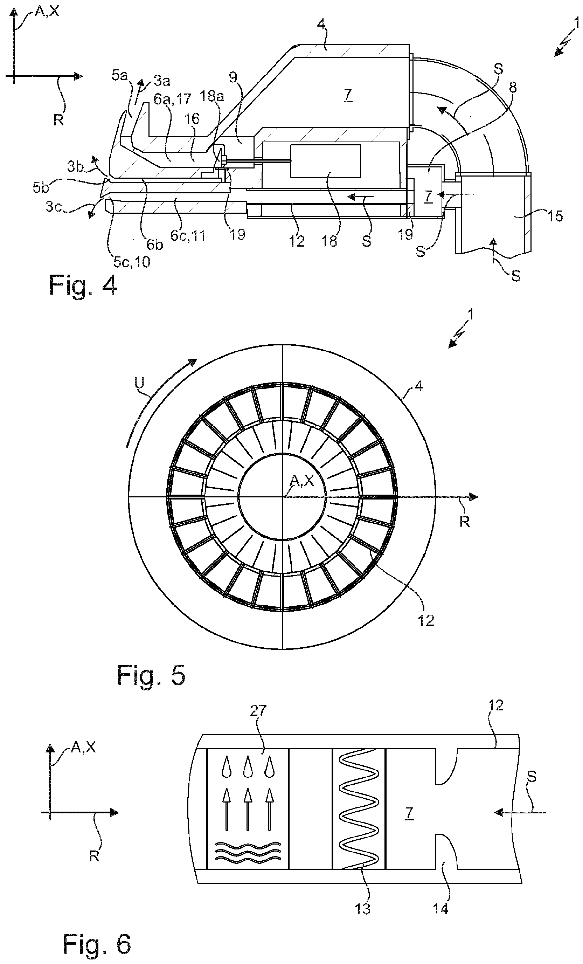

Der den separaten Luftaustritt 10 mit dem äußeren Luftringraum 8 verbindende dritte Luftringkanal 6c ist als separater Luftringkanal 11 ausgebildet. Der separate Luftringkanal 11 ist mittels einer Mehrzahl von separaten Verbindungselementen 12, die als Rohrelemente ausgebildet sind, fluidisch mit dem äußeren Luftringraum 8 verbunden. Die Verbindungselemente 12 sind in Figur 5 im Detail dargestellt und beschrieben. Ausschließlich der separate Luftringkanal 11 ist über die separaten Verbindungselemente 12 direkt mit dem äußeren Luftringraum 8 verbunden. Aussagen, die sich auf den dritten Luftringkanal 6c beziehen, beziehen sich mutatis mutandis auf den separaten Luftringkanal 11 und umgekehrt.

Eine Luftzuführung 15 ist fluidisch mit dem äußeren Luftringraum 8 verbunden. Der äußere Luftringraum 8 ist wiederrum fluidisch mit dem inneren Luftringraum 9 und über den separaten, dritten Luftringkanal 11, 6c und die separaten Verbindungselemente 12, mit dem mindestens einen separaten, dritten Luftaustritt 10, 5c verbunden. Die für den separaten Luftaustritt 10 bereitgestellte Kühlluft 7 ist durch die Luftzuführung 15 direkt in den äußeren Luftringraum 8 und die für den ersten und zweiten Luftaustritt 5a, 5b bereitgestellte Kühlluft 7 durch die Luftzuführung 15 indirekt über den äußeren Luftringraum 8 in den inneren Luftringraum 9 einbringbar. Die Luftzuführung 15 ist in Form von Zulaufstutzen ausgebildet, die bevorzugt an mehreren Stellen Kühlluft 7 in den äußeren Luftringraum 8 einbringen.

Der erste Luftringkanal 6a ist durch eine Mehrzahl von sich im Wesentlichen radial erstreckenden Trennelementen 16 in eine Mehrzahl von Luftringkanalsegmente 17 unterteilt, die umfänglich benachbart angeordnet sind, sodass auch der Kühlluftstrom 3a des ersten Luftaustritts 5a segmentiert ist.

Der erste Kühlluftstrom 3a, insbesondere die Luftmenge und die Luftgeschwindigkeit, des ersten Luftaustritts 5a bzw. der Luftringkanalsegmente 17 ist mittels zweiter Stellglieder 18, die jeweils eine Lineareinheit aufweisen, regelbar. Jedes zweite Stellglied 18 weist zudem ein damit verbundenes Schieberelement 18a auf. Durch die zweiten Stellglieder 18 bzw. die Lineareinheit der zweiten Stellglieder 18 ist das damit verbundene Schieberelement 18a radial vor und zurück bewegbar, d.h. die Position des Schieberelements 18a entlang der Radialrichtung R ist durch das dazugehörige zweite Stellglied 18 einstellbar. Dadurch ist die Luftmenge und die Luftgeschwindigkeit des ersten Kühlluftstroms 3a des ersten Luftaustritts 5a regelbar. Der erste Kühlluftstrom 3a ist für jedes Luftringkanalsegmente 17 durch ein einzelnes zweites Stellglied 18 regelbar, wobei sich dies durch unterschiedliche Längen bzw. Erstreckungen der Trennelemente 16 in Radialrichtung nach außen gewährleisten lässt. Die Regelung der zweiten Stellglieder 18 erfolgt bevorzugt basierend aus Messdaten des Messsensors 24. Der Kühlluftstrom 3b, 3c, insbesondere die Luftmenge und die Luftgeschwindigkeit, des zweiten und des dritten (separaten) Luftaustritts 5b, 5c, 10 ist mittels von Einstellelementen 19, die als Lochbleche ausgebildet sind, einstellbar. Die Einstellung erfolgt bevorzugt manuell.

In der Figur 4 ist die Vorrichtung 1 zur Kühlung von schlauchförmig extrudierter Blasfolie 2 gemäß einer weiteren bevorzugten Ausführungsform der Erfindung in einer Detailansicht des Querschnitts gezeigt. Der Schnitt erfolgt senkrecht zur Axialrichtung A bzw. Abzugsrichtung X durch den Mittelpunkt der ringförmigen Vorrichtung 1. Die Ausführungen zu den Figuren 2 und 3 treffen auch auf die Figur 4 zu.

Gemäß der in Figur 4 dargestellten Ausführungsform ist eine Luftzuführung 15 jeweils fluidisch mit dem äußeren 8 und dem inneren Luftringraum 9 verbunden, sodass die für die Luftaustritte 5a, 5b, 5c bereitgestellte Kühlluft 7 durch die Luftzuführung 15 direkt und unabhängig voneinander in den jeweiligen Luftringraum 8, 9 einbringbar ist. In den äußeren Luftringraum 8 mündet nur der separate dritte Luftringkanal 6c, 11, der mit dem separaten dritten Luftaustritt 5c, 10 verbunden ist. Der erste Luftringkanal 6a und der zweite Luftringkanal 6b münden in den inneren Luftringraum 9.

In Figur 5 ist die Vorrichtung 1 bzw. der Kühlringkörper 4 gemäß einer bevorzugten Ausführungsform der Erfindung von unten entlang der Axialrichtung A bzw. der Abzugsrichtung X in einer Querschnittsansicht gezeigt, wobei der Schnitt durch die senkrecht zu der Axialrichtung A bzw. der Abzugsrichtung X durch die separaten Verbindungselemente 12 hindurch erfolgt ist, sodass die separaten Verbindungselemente 12 offengelegt sind.

Aus Figur 5 ist die kreisringförmige Ausbildung des Kühlringkörpers 4 erkennbar. Die Axialrichtung A bzw. die Abzugsrichtung X verlaufen durch den Mittelpunkt des Kühlringkörpers 4. Die extrudierte Blasfolie 2 wird durch den Kreisring hindurchgeführt. Weiterhin ist die Umfangsrichtung U dargestellt.

Die separaten Verbindungselemente 12, die den separaten Luftringkanal 11 mit dem äußeren Luftringraum 8 verbinden, sind umfangsverteilt angeordnet und erstrecken sich im Wesentlichen radial.

In Figur 6 ist ein separates Verbindungselement 12 gemäß einer bevorzugten Ausführungsform der Erfindung schematisch gezeigt. Das Verbindungselement 12 ist jeweils einseitig mit dem äußeren Luftringraum 8 und dem separaten Luftringkanal 11 verbunden.

Das separate Verbindungselement 12 ist in der dargestellten Ausführungsform als Rohrelement ausgebildet. Innerhalb des separaten Verbindungselements 12 ist ein erstes Stellglied 16 angeordnet, das bevorzugt als Ventil ausgebildet ist, und mittels welchem ein Kühlluftstrom 3c, insbesondere die Luftmenge und die Luftgeschwindigkeit, des separaten Luftaustritts 11 regelbar ist. Des Weiteren ist in Strömungsrichtung S nach dem ersten Stellglied 14 eine Temperiereinheit 13 angeordnet, die dazu ausgebildet ist, die in Richtung des separaten Luftaustritts 10 hindurchströmende Kühlluft 7 aufzuheizen und/oder abzukühlen. Zusätzlich ist in Strömungsrichtung S nach der Temperiereinheit 13 eine Verdampfereinheit 27 angeordnet, die dazu ausgebildet ist, die in Richtung des separaten Luftaustritts 10 hindurchströmende Kühlluft 7 mit einem Aerosol bzw. Dampf anzureichern. Die Anordnung der Verdampfereinheit 27, der Temperiereinheit 13 und des ersten Stellglieds 14 innerhalb des separaten Verbindungselements kann bezogen auf die Strömungsrichtung S anders sein. Ferner können die Verdampfereinheit 27, die Temperiereinheit 13 und das erste Stellglied 14 auch gemeinsam angeordnet sein.

In den Figuren zeigen mit dem Bezugszeichen S gekennzeichnete Pfeile die Strömungsrichtung S der Kühlluft 7 an.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung
- 100: System
- 2: Blasfolie
- 3a-c: Kühlluftstrom
- 4: Kühlringkörper
- 5a-c: Luftaustritt
- 6a-c: Luftringkanal
- 7: Kühlluft
- 8: äußerer Luftringraum
- 9: innerer Luftringraum
- 10: separater Luftaustritt
- 11: separater Luftringkanal
- 12: separates Verbindungselement
- 13: Temperiereinheit
- 14: erstes Stellglied
- 15: Luftzuführung
- 16: Trennelement
- 17: Luftringkanalsegment
- 18: zweites Stellglied
- 18a: Schieberelement
- 19: Einstellelement
- 20: Blasfolienextruder
- 21: Folienblaskopf
- 22: Ringdüse
- 23: Hubelement
- 24: Messsensor
- 25: Kalibrierkorb
- 26: Wendestangensystem
- 27: Verdampfereinheit
- U: Umfangsrichtung
- A: Axialrichtung
- R: Radialrichtung
- X: Abzugsrichtung
- S: Strömungsrichtung
- d: Abstand

## Patentansprüche

1. Vorrichtung (1) zur Kühlung von schlauchförmig extrudierter Blasfolie (2), insbesondere von Kunststofffolie, mittels eines auf die Oberfläche der Blasfolie (2) gerichteten Kühlluftstroms (3a, 3b, 3c), umfassend einen Kühlringkörper (4) mit mindestens drei innenumfänglich verlaufenden und axial übereinander angeordneten ringförmigen Luftaustritten (5a, 5b, 5c), die den Kühlluftstrom (3a, 3b, 3c) bereitstellen, wobei die Luftaustritte (5a, 5b, 5c) jeweils über einen sich im Wesentlichen radial erstreckenden Luftringkanal (6a, 6b, 6c) mit einem Kühlluft (7) bereitstellenden Luftringraum (8, 9) fluidisch verbunden sind,
**dadurch gekennzeichnet, dass**
mindestens ein äußerer Luftringraum (8) und ein innerer Luftringraum (9) vorgesehen sind, die räumlich separiert voneinander angeordnet sind, wobei mindestens einer der Luftaustritte (5a, 5b, 5c) als separater Luftaustritt (10) ausgebildet ist, dem ausschließlich durch den äußeren (8) oder den inneren Luftringraum (9) Kühlluft (7) bereitgestellt ist.

2. Vorrichtung (1) nach Anspruch 1,
**dadurch gekennzeichnet, dass**
zumindest in den äußeren Luftringraum (8) und den inneren Luftringraum (9) jeweils mindestens ein Luftringkanal (6a, 6b, 6c) mündet.

3. Vorrichtung (1) nach Anspruch 1 oder 2,
**dadurch gekennzeichnet, dass**
der den mindestens einen separaten Luftaustritt (10) mit dem entsprechenden Luftringraum (8, 9) verbindende Luftringkanal (6a, 6b, 6c) als separater Luftringkanal (11) ausgebildet ist, der mittels mindestens eines separaten Verbindungselements (12), insbesondere mittels eines Rohrelements, fluidisch mit dem entsprechenden Luftringraum (8, 9) verbunden ist, wobei ausschließlich der separate Luftringkanal (11) über das Verbindungselement (12) direkt mit dem entsprechenden Luftringraum (8, 9) verbunden ist.

4. Vorrichtung (1) nach einem der vorhergehenden Ansprüche,
**dadurch gekennzeichnet, dass**
zumindest innerhalb des mindestens einen separaten Verbindungselements (12) eine Temperiereinheit (13) angeordnet ist, die dazu ausgebildet ist, die in Richtung des separaten Luftaustritts (10) hindurchströmende Kühlluft (7) aufzuheizen und/oder abzukühlen.

5. Vorrichtung (1) nach einem der vorhergehenden Ansprüche,
**dadurch gekennzeichnet, dass**
mindestens eine Verdampfereinheit vorgesehen ist, die zumindest teilweise innerhalb des mindestens einen separaten Verbindungselements (12) angeordnet ist oder zumindest fluidisch mit dem mindestens einen separaten Verbindungselement (12) verbunden ist.

6. Vorrichtung (1) nach einem der vorhergehenden Ansprüche,
**dadurch gekennzeichnet, dass**
innerhalb des mindestens einen separaten Verbindungselements (12) ein erstes Stellglied (14), insbesondere ein Ventil, angeordnet ist, mittels welchem ein Kühlluftstrom (3a, 3b, 3c), insbesondere die Luftmenge und die Luftgeschwindigkeit, des separaten Luftaustritts (11) regelbar, insbesondere maschinell regelbar, ist.

7. Vorrichtung (1) nach einem der Ansprüche 1 bis 6,
**dadurch gekennzeichnet, dass**
eine Luftzuführung (15) jeweils fluidisch mit dem äußeren (8) und dem inneren Luftringraum (9) verbunden ist, sodass die für die Luftaustritte (5a, 5b, 5c) bereitgestellte Kühlluft (7) durch die Luftzuführung (15) direkt und unabhängig voneinander in den jeweiligen Luftringraum (8, 9) einbringbar ist.

8. Vorrichtung (1) nach einem der Ansprüche 1 bis 6,
**dadurch gekennzeichnet, dass**
eine Luftzuführung (15) fluidisch mit dem äußeren Luftringraum (8) verbunden ist und wobei der äußere Luftringraum (8) wiederrum fluidisch mit dem inneren Luftringraum (9) und, über den separaten Luftringkanal (11) und das separate Verbindungselement (12), mit dem mindestens einen separaten Luftaustritt (10) verbunden ist, sodass die für den separaten Luftaustritt (10) bereitgestellte Kühlluft (7) durch die Luftzuführung (15) direkt in den äußeren Luftringraum (8) und die für die weiteren Luftaustritte (5a, 5b, 5c) bereitgestellte Kühlluft (7) durch die Luftzuführung (15) indirekt über den äußeren Luftringraum (8) in den inneren Luftringraum (9) einbringbar ist.

9. Vorrichtung (1) nach einem der vorhergehenden Ansprüche,
**dadurch gekennzeichnet, dass**
mindestens ein Luftringkanal (6a, 6b, 6c) durch eine Mehrzahl von sich im Wesentlichen radial erstreckenden Trennelementen (16) in eine Mehrzahl von Luftringkanalsegmente (17) unterteilt ist, die umfänglich benachbart angeordnet sind, sodass auch der Kühlluftstrom (3a, 3b, 3c) des jeweils verbundenen Luftaustritts (5a, 5b, 5c) segmentiert ist.

10. Vorrichtung (1) nach Anspruch 9,
**dadurch gekennzeichnet, dass**
der Kühlluftstrom (3a, 3b, 3c), insbesondere die Luftmenge und die Luftgeschwindigkeit, mindestens eines Luftaustritts (5a, 5b, 5c), insbesondere der Luftringkanalsegmente (17), mittels mindestens eines zweiten Stellglieds (18), insbesondere mit einer Lineareinheit, regelbar, insbesondere maschinell regelbar, ist und wobei der Kühlluftstrom (3a, 3b, 3c), insbesondere die Luftmenge und die Luftgeschwindigkeit, der weiteren Luftaustritte (5a, 5b, 5c) mittels mindestens eines Einstellelements (19), insbesondere eines Lochblechs, einstellbar, insbesondere manuell einstellbar, ist.

11. Vorrichtung (1) nach Anspruch 9 oder 10,
**dadurch gekennzeichnet, dass**
die Trennelemente (16) bezogen auf eine Umfangsrichtung (U) des Kühlringkörpers (4) gekippt angeordnet sind, sodass ein ringstromförmiger Kühlluftstrom (3a, 3b, 3c) erzeugt wird.

12. Vorrichtung (1) nach einem der vorhergehenden Ansprüche,
**dadurch gekennzeichnet, dass**
mindestens zwei Luftaustritte (5a, 5b, 5c) jeweils einen Kühlluftstrom (3a, 3b, 3c) in einer Axialrichtung (A) des Kühlringkörpers (4) und mindestens ein Luftaustritt (5a, 5b, 5c), insbesondere der separate Luftaustritt (10), einen Kühlluftstrom (3a, 3b, 3c) entgegen der Axialrichtung (a) des Kühlringkörpers (4) bereitstellen.

13. System (100) zur Herstellung von schlauchförmiger Blasfolie (2), umfassend eine Vorrichtung (1) zur Kühlung der schlauchförmig extrudierten Blasfolie (2) nach einem der vorhergehenden Ansprüche und einen Blasfolienextruder (20) mit einem Folienblaskopf (21), der eine Ringdüse (22) umfasst, aus der die Blasfolie (2) schlauchartig austritt, wobei der Blasfolienextruder (20) bezogen auf eine Axialrichtung (A) eines Kühlringkörpers (4) unterhalb der Vorrichtung (1) angeordnet ist, sodass die durch den Blasfolienextruder (20) extrudierte Blasfolie durch die Vorrichtung (1) gekühlt wird.

14. System (100) nach Anspruch 13,
**dadurch gekennzeichnet, dass**
ein Abstand (d) zwischen der Vorrichtung (1) und dem Blasfolienextruder (20) einstellbar ist, wobei der Kühlluftstrom (3a, 3b, 3c), insbesondere die Luftmenge und die Luftgeschwindigkeit, mindestens eines Luftaustritts (5a, 5b, 5c), insbesondere des separaten Luftaustritts (10), in Abhängigkeit des Abstandes (d) regelbar und/oder einstellbar ist.

15. Verfahren zur Herstellung von schlauchförmiger Blasfolie (2) unter Verwendung eines Systems (100) nach einem der Ansprüche 13 oder 14.
